(19) Europäisches Patentamt
European Patent Office
Office européen des brevets

(11) Veröffentlichungsnummer: **0 062 799**
**A1**

(12) # EUROPÄISCHE PATENTANMELDUNG

(21) Anmeldenummer: **82102463.5**

(22) Anmeldetag: **24.03.82**

(51) Int. Cl.$^3$: **C 12 G 3/08**

(30) Priorität: **10.04.81 DE 3114648**

(43) Veröffentlichungstag der Anmeldung:
**20.10.82 Patentblatt 82/42**

(84) Benannte Vertragsstaaten:
**AT BE CH FR GB IT LI LU NL SE**

(71) Anmelder: **Firma Peter Eckes**
**Bahnstrasse 6**
**D-6501 Nieder-Olm(DE)**

(72) Erfinder: **Wiesenberger, Alfred**
**Haideweg 29**
**D-6200 Wiesbaden(DE)**

(72) Erfinder: **Kolb, Erich, Dr.**
**Wilhelm Holzamer Weg 68**
**D-6501 Nieder-Olm(DE)**

(72) Erfinder: **Weisrock, Reinhard**
**Weinbergstrasse 12**
**D-6501 Nieder-Olm(DE)**

(72) Erfinder: **Keding, Knut, Dr.**
**Hindemithstrasse 39**
**D-6500 Mainz 31(DE)**

(74) Vertreter: **Weinhold, Peter, Dr. et al,**
**Siegfriedstrasse 8**
**D-8000 München 40(DE)**

(54) **Verfahren zur Herstellung eines alkoholfreien Weines.**

(57) Die Erfindung betrifft ein Verfahren zur Herstellung von alkoholfreiem Wein. Trinkwein wird mit einem geeigneten organischen Extraktionsmittel extrahiert, die wässrige Phase wird zur Entfernung des Alkohols einer Destillation unterworfen, aus der organischen Phase wird das Extraktionsmittel abgetrennt. Die erhaltenen Rückstände werden vereinigt und mit Wasser versetzt.

EP 0 062 799 A1

Croydon Printing Company Ltd.

COMPLETE DOCUMENT

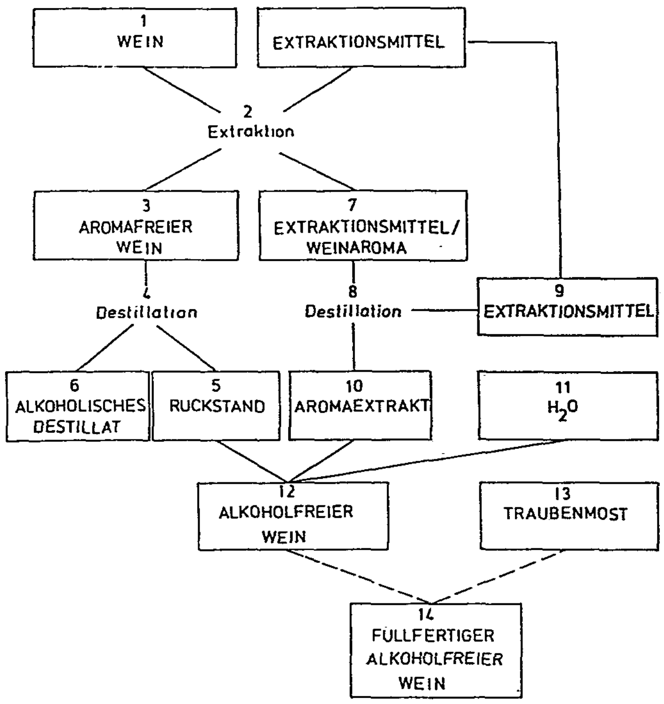
1
WEIN
EXTRAKTIONSMITTEL
2
Extraktion
3
AROMAFREIER
WEIN
7
EXTRAKTIONSMITTEL/
WEINAROMA
4
Destillation
8
Destillation
9
EXTRAKTIONSMITTEL
6
ALKOHOLISCHES
DESTILLAT
5
RUCKSTAND
10
AROMAEXTRAKT
11
$H_2O$
12
ALKOHOLFREIER
WEIN
13
TRAUBENMOST
14
FÜLLFERTIGER
ALKOHOLFREIER
WEIN

Die vorliegende Erfindung betrifft ein Verfahren zur Herstellung eines alkoholfreien Weines aus Trauben- oder Fruchtwein.

Es ist bisher technisch noch nicht gelungen, alkoholfreie bzw. alkoholreduzierte Weine herzustellen, die in ihrer geschmacklichen Qualität dem alkoholhaltigen Produkt entsprechen, obwohl die folgenden Verfahren bereits bekannt sind:

In der schweizerischen Patentschrift 44 090 wird zur Alkoholentfernung aus Flüssigkeiten, insbesondere Wein, ein Weg vorgeschlagen, der darauf beruht, daß bei einem Destillationsverfahren,z.B. des Weines,ein Destillat in zwei hintereinander angebrachten Vorlagen aufgefangen wird. Der bei der Destillation entweichende Alkohol sammelt sich in der ersten Vorlage und die leichter flüchtigen Riech- und Aromastoffe können sich in der zweiten, mit Absorptionsflüssigkeit gefüllten Vorlage anreichern. Dabei geht aber ein wesentlicher Teil des Bouquets verloren.

In der DE-OS 24 24 954 wird ein Verfahren zur Herstellung eines Getränkes beschrieben, bei dem Traubensaft mit Weinhefe vergoren wird und auf diese Weise ein trinkbarer Grundwein hergestellt wird. Aus diesem wird eine alkoholhaltige Fraktion destillativ abgetrennt und der Rückstand, welchen man vor bakterieller Verunreinigung schützt, mit einem Fruchtsaftprodukt zu einem Getränk verarbeitet. Das dadurch hergestellte Getränk ist in geschmacklicher Hinsicht mit dem Ausgangswein nicht mehr vergleichbar.

Verfahren, die auf eine Verringerung des Alkoholgehaltes durch Modifizierung von Gärungsprozessen beruhen, wie sie die DE-PS 26 29 666 oder die DE-OS 28 32 487 für die Bierwürzeherstellung beschreiben, sind auf die Weinherstellung nicht übertragbar. Eine derartige Arbeitsweise würde einen

Eingriff in den Gärungsprozess bedeuten und die Ausbildung des typischen Weinaromas überhaupt verhindern.

Aufgabe der vorliegenden Patentanmeldung ist es, einen alkoholfreien bzw. alkoholarmen Wein herzustellen, der hinsichtlich der Geschmackseigenschaften des Bouquets und anderer Eigenschaften, die den Weingenuß bestimmen, mit alkoholhaltigen natürlichen Weinen weitestgehend vergleichbar ist. Dabei gilt es, die im alkoholhaltigen Wein vorhandenen Mengenverhältnisse der natürlichen Inhaltsstoffe wie z.B. Zucker, Säure, Mineralstoffe, Vitamine, Geruchs- und Geschmacksstoffe zu erhalten. Weiterhin sollen insbesondere die sorten- und lagenspezifischen Charakteristika des Ausgangsweines im alkoholfreien Wein wiederaufgefunden werden.

Gegenstand der vorliegenden Anmeldung ist ein Verfahren zur Herstellung eines alkoholfreien Weines aus Traubenwein oder Fruchtwein, das dadurch gekennzeichnet ist, daß man einen Trinkwein mit einem, gegebenenfalls halogenierten Alkan, mit Petroläther bzw. mit Dialkyläther extrahiert, die wässrige Phase zur Abtrennung des Alkohols destilliert, aus der organischen Phase das Extraktionsmittel, vorzugsweise ebenfalls durch Destillation, entfernt und den dabei erhaltenen Aromarückstand mit dem bei der Alkoholabtrennung erhaltenen Destillationsrückstand und mit entmineralisiertem Wasser vereinigt.

Eine spezielle Ausführungsform des erfindungsgemäßen Verfahrens wird zunächst anhand der schematischen Zeichnung näher erläutert.

Wein (1) wird mit einem mit Wasser nicht mischbaren organischen Extraktionsmittel versetzt und ausreichend lange kräftig vermischt (2). Nach dem Absetzen und der Phasentrennung wird die wässrige Phase (3) abgetrennt und zur

Entfernung des Alkohols einer Vakuumdestillation (4) unterworfen, wobei man das alkoholische Destillat (6) erhält, welches außerhalb des Rahmens der vorliegenden Erfindung einer geeigneten Verwendung zugeführt werden kann. Der Destillationsrückstand enthält die restlichen Inhaltsstoffe des Weins (5).

Aus der abgetrennten organischen Phase (7) wird das Extraktionsmittel durch Destillation im Vakuum (8) entfernt und als Rückstand der Aromaextrakt (10) erhalten. Das kondensierte Extraktionsmittel (9) kann erneut zur Extraktion in Stufe (2) verwendet werden. Der Destillationsrückstand (5) und der Aromaextrakt (10) werden entsprechend ihres Anteils im ursprünglichen Ausgangswein gemischt und mit soviel entmineralisiertem Wasser (11) versetzt, daß ein alkoholfreier Wein (12) in einer Volumenmenge wie die Menge des Ausgangsweines erhalten wird. Wahlweise kann zur Geschmacksabrundung, wie in der Kellereiwirtschaft üblich, Traubenmost (13) unter Erhalt von füllfertigem, alkoholfreiem Wein (14) zugemischt werden.

Zur Erzielung der gewünschten Bouquetnoten im alkoholfreien Endprodukt werden als Ausgangsweine Trinkweine verwendet, die nach fachgerechten Gesichtspunkten ausgebaut und von der Hefe befreit wurden. Sie sollen zweckmäßig einen ausgeprägten Sortencharakter oder Lagencharakter aufweisen. Weine mit solch einem ausgeprägten Sortencharakter sind z.B. Müller-Thurgau, Scheurebe, Gewürztraminer, Morio-Muskat, etc.

Zur Extraktion der Weinaromastoffe kommen als Extraktionsmittel beispielsweise verzweigte oder lineare Alkane, wie z.B. Butan, Pentan, Hexan, Heptan, Oktan, die gegebenenfalls halogeniert sein können, in Frage. Wird ein halogeniertes Alkan eingesetzt, so kann es die folgende allgemeine Formel haben:

$$X_mC_nH_pY$$

wobei X ein Wasserstoff oder ein Halogenatom, Y ein Halogenatom, m und n eine ganze Zahl von 1 bis 3, p = 2 n - m + 1 bedeutet. Von den Alkanen finden n-Pentan und n-Hexan besonders bevorzugt Verwendung. Das halogenierte Alkan enthält vorzugsweise Chlor. Als bevorzugtes halogeniertes Extraktionsmittel wird Äthylenchlorid eingesetzt.

Weitere vorteilhafte Extraktionsmittel sind Petroläther sowie Dialkyläther. Die bevorzugten Petroläther sind solche einer Fraktion zwischen etwa 28 bis 40°C. Die Dialkyläther, von denen z.B. Diäthyläther besonders zweckmäßig ist, können vorzugsweise 1 bis 4 Kohlenstoffatome in jeder Alkylgruppe aufweisen.

Für die Extraktion können selbstverständlich auch Mischungen aller oben genannten Extraktionsmittel verwendet werden. In diesem Fall können die Mengenverhältnisse von Dialkyläthern zu Alkanen vorzugsweise etwa 0,5 bis 2:1 betragen.

Die Aromaextraktion kann bei etwa 4 bis 20°C, vorzugsweise bei 4 bis 10°C durch intensives Vermischen von Wein und Extraktionsmittel innerhalb eines ausreichenden Zeitraums erfolgen. Die Temperatur soll vorteilhafterweise möglichst niedrig gehalten werden, damit kein Extraktionsmittel in die Gasphase übergehen kann. Die Verhältnisse von Wein zu Extraktionsmittel können zweckmäßig etwa 5:1 bis 20:1 betragen.

Nach dem Mischvorgang, der beispielsweise in Abhängigkeit von der Mischintensität von wenigen Minuten, meist etwa 5 bis 15 Minuten, dauern kann, bleibt die Mischung vorteilhaft solange gekühlt stehen, bis sich das Extraktionsmittel vollständig vom Wein getrennt hat und eine deutliche Phasengrenze vorhanden ist. Anschließend wird die wässrige

Phase vorsichtig von der organischen Phase abgelassen.

Dem bereits mit Aromastoffen beladenen Extraktionsmittel kann erneut frischer Wein zugesetzt und die Extraktionsbehandlung ein oder mehrmals wiederholt werden,und zwar vorzugsweise bis ein Verhältnis von extrahiertem Wein zu Lösungsmittel von etwa 20:1 gegeben ist. Eine höhere Beladung des Extraktionsmittels ist nicht zweckmäßig, da dann die Extraktion der Aromakomponenten aus dem Wein nicht mehr vollständig ist.

Die Extraktion kann mit handelsüblichen Apparaturen sowohl in diskontinuierlicher als auch in kontinuierlicher Weise erfolgen, wobei auch ein Gegenstromverfahren angewendet werden kann. Der Extraktionsvorgang kann besonders vorteilhaft in einer Gegenstromextraktionsanlage erfolgen.

Bei der Destillation der wässrigen Phase zur Entfernung des Alkohols (4) empfiehlt sich eine schonende Vakuumdestillation bei etwa 100 bis 150 Torr, um durch Temperaturbelastungen verursachte Geschmacksbeeinträchtigungen der noch vorhandenen Inhaltsstoffe zu vermeiden.

Das beladene Extraktionsmittel kann in einer herkömmlichen Destillationseinrichtung vom Aroma abgetrennt werden, und zwar vorteilhaft im Vakuum bei 0 bis 4°C.

Der Aromaextrakt liegt nach der Entfernung des Extraktionsmittels in konzentrierter Form als ölige, gelbliche Flüssigkeit vor. Der Geruch ist stark aromatisch und der Weintyp ist nur schwach zu erkennen.

Zur erfindungsgemäßen Herstellung des alkoholfreien Weines werden der ölige Aromaextrakt, der Rückstand aus der Alkoholdestillation und in weiterer Folge entmineralisiertes

Wasser in derartigen Mengenanteilen vermischt, daß das ursprüngliche Volumen des Ausgangsweines wieder hergestellt wird.

Der füllfertige,alkoholfreie Wein entfaltet nun wieder das typische Bouquet des Ausgangsweines, so daß es von diesem kaum noch zu unterscheiden ist. Trotz Fehlens des Alkohols wird allenfalls eine geringfügige Verstärkung der Säure empfunden, aber keine Aromabeeinträchtigung festgestellt. Der damit erfindungsgemäß erhaltene alkoholfreie Wein stellt so eine hochwertige Handelsware dar.
Zur Geschmacksharmonisierung kann, wie in der Kellereiwirtschaft üblich, Traubenmost, beispielsweise unvergorener Gewürztraminermost, als Süßreserve, mit dem alkoholfreien Wein verschnitten werden. Um für Verkostungen mit handelsüblichen alkoholartigen Weinen vergleichbare Voraussetzungen zu haben, hat sich gezeigt, daß zur Geschmacksharmonie im alkoholfreien Wein ein Säure:Zucker Verhältnis von etwa 1:5 bis 1:8 zweckmäßig ist.

Das erfindungsgemäße Verfahren zur Herstellung eines alkoholfreien Weines kann grundsätzlich mit den üblichen in der Kellereiwirtschaft verwendeten Anlagen ausgeführt werden. Die Apparaturen sind zweckmäßigerweise aus solchen Werkstoffen gefertigt, daß jede Verunreinigung durch Schwermetallionen vermieden wird. Besonders geeignet sind daher Gerätschaften aus Edelstahl und/oder Glas.

Das erfindungsgemäße Verfahren wird durch das nachfolgende Beispiel näher erläutert.

Beispiel:

1000 l Gewürztraminerwein (+ 4°C) wird mit 200 l n-Pentan (+ 4°C) intensiv in einem Mischbehälter vermischt.

Die Wein/Pentan-Mischung wird anschließend in einen nach unten konisch zulaufenden, hermetisch verschließbaren Behälter mit Temperiermantel und Schauglas geleitet, wo die Phasentrennung zwischen Lösungsmittel und entaromatisiertem Wein erfolgt.

Nach ca. 30 Minuten hat sich eine scharfe Trennschicht zwischen Wein und Lösungsmittel ausgebildet. Danach wird der aromafreie Wein vorsichtig unter dem Pentan abgelassen und der Alkoholdestillation zugeführt. Die Alkoholabtrennung geschieht unter schonenden Bedingungen, z.B. in einem Dünnfilm -Verdampfer, im Vakuum um 150 Torr bei ca. 55°C.

Nach 35% Brüdenabdampfung ist der verbleibende Destillationsrückstand alkoholfrei. Die Menge an alkoholfreiem Rückstand beträgt 650 l.

Aus der organischen Phase wird Pentan durch Vakuumdestillation bei 100 Torr und +/- 0°C abgetrennt. Das Pentan kann der Aromaextraktionsstufe erneut zugeführt werden. Als Destillationsrückstand wird etwa 1 l ölartiger Aromaextrakt erhalten.

Zur Herstellung eines alkoholfreien Gewürztraminers werden der alkoholfreie Rückstand (650 l), der Aromaextrakt (1 l) und 349 l entmineralisiertes Wasser zusammengemischt.

Der alkoholfreie Wein wurde mit fünf anderen nicht entalkoholisierten Weinen vergleichbarer Qualitätsstufe 22 kompetenten Verkostern in einer verdeckten Probe vorgestellt. Der alkoholfreie Wein wurde einstimmig als arttypisch und fruchtig bezeichnet, der von den alkoholhaltigen Weinen in der Weinigkeit nicht zu unterscheiden war.

# Patentansprüche:

1.- Verfahren zur Herstellung eines alkoholfreien Weines aus Traubenwein oder Fruchtwein, dadurch gekennzeichnet, daß man einen Trinkwein mit einem, gegebenenfalls halogenierten Alkan, mit Petroläther oder mit Dialkyläther extrahiert, die wässrige Phase zur Abtrennung des Alkohols destilliert, aus der organischen Phase das Extraktionsmittel vorzugsweise ebenfalls durch Destillation entfernt und den dabei erhaltenen Aromarückstand mit dem bei der Alkoholabtrennung erhaltenen Destillationsrückstand und mit entmineralisiertem Wasser vereinigt.

2.- Verfahren nach Anspruch 1, dadurch gekennzeichnet, daß als Extraktionsmittel Alkane mit 4 bis 8 Kohlenstoffatomen oder deren Gemische, vorzugsweise n-Pentan oder n-Hexan verwendet wird.

3.- Verfahren nach Anspruch 1, dadurch gekennzeichnet, daß als Extraktionsmittel ein halogeniertes Alkan der allgemeinen Formal

$$X_mC_nH_pY$$

in der n = eine genze Zahl von 1 bis 3,
m = eine ganze Zahl von 1 bis 3,
p = 2n - m + 1
X Wasserstcff oder ein Halogenatom, vorzugsweise Chlor,
Y ein Halogenatom, vorzugsweise Chlor, bedeutet, verwendet wird.

4.- Verfahren nach Anspruch 3, dadurch gekennzeichnet, daß als Extraktionsmittel Äthylenchlorid verwendet wird.

5.- Verfahren nach Anspruch 1, dadurch gekennzeichnet, daß als Extraktionsmittel eine Petrolätherfraktion mit einem Siedepunkt von 28 bis 40°C verwendet wird.

6.- Verfahren nach Anspruch 1, dadurch gekennzeichnet, daß als Extraktionsmittel ein Dialkyläther mit 1 bis 4 Kohlenstoffatomen in jeder Alkylgruppe, vorzugsweise Diäthyläther verwendet wird.

7.- Verfahren nach Anspruch 1, dadurch gekennzeichnet, daß als Extraktionsmittel eine Mischung aus einem Dialkyläther mit 1 bis 4 Kohlenstoffatomen in jeder Alkylgruppe und einem Alkan mit 4 bis 8 C-Atomen, vorzugsweise Mischungen aus dem Diäthyläther und n-Pentan insbesondere im Verhältnis 0,5 bis 2:1 verwendet wird.

8.- Verfahren nach Anspruch 1 - 7, dadurch gekennzeichnet, daß das Extraktionsmittel in einem Gewichtsverhältnis von 1:5 bis 1:20, bezogen auf den eingesetzten Wein, verwendet wird.

9.- Verfahren nach Anspruch 1 - 8, dadurch gekennzeichnet, daß die Extraktion bei einer Temperatur von 4 bis 20°C durchgeführt wird.

10.- Verfahren nach Anspruch 1 - 9, dadurch gekennzeichnet, daß die Extraktion in mehreren Extraktionsbehältern in kontinuierlicher oder diskontinuierlicher Fahrweise durchgeführt wird.

11.- Verfahren nach Anspruch 1 - 10, dadurch gekennzeichnet, daß die Destillation zur Abtrennung des Alkohols im Vakuum, vorzugsweise bei 100 bis 150 Torr durchgeführt wird.

12.- Verfahren nach Anspruch 1 - 11, dadurch gekennzeichnet, daß die Entfernung des Extraktionsmittels durch Destillation im Vakuum bei 0 bis 4$^{o}$C vorgenommen wird.

13.- Verfahren nach Anspruch 1 - 12, dadurch gekennzeichnet, daß die vereinigten Rückstände aus der Alkohol- und der Extraktionsmitteldestillation mit Wasser auf die ursprüngliche Volumenmenge des eingesetzten Weines aufgefüllt werden.

14.- Verfahren nach Anspruch 1 - 13, dadurch gekennzeichnet, daß der erhaltene alkoholfreie Wein in an sich bekannter Weise mit unvergorenem Traubenmost verschnitten wird.

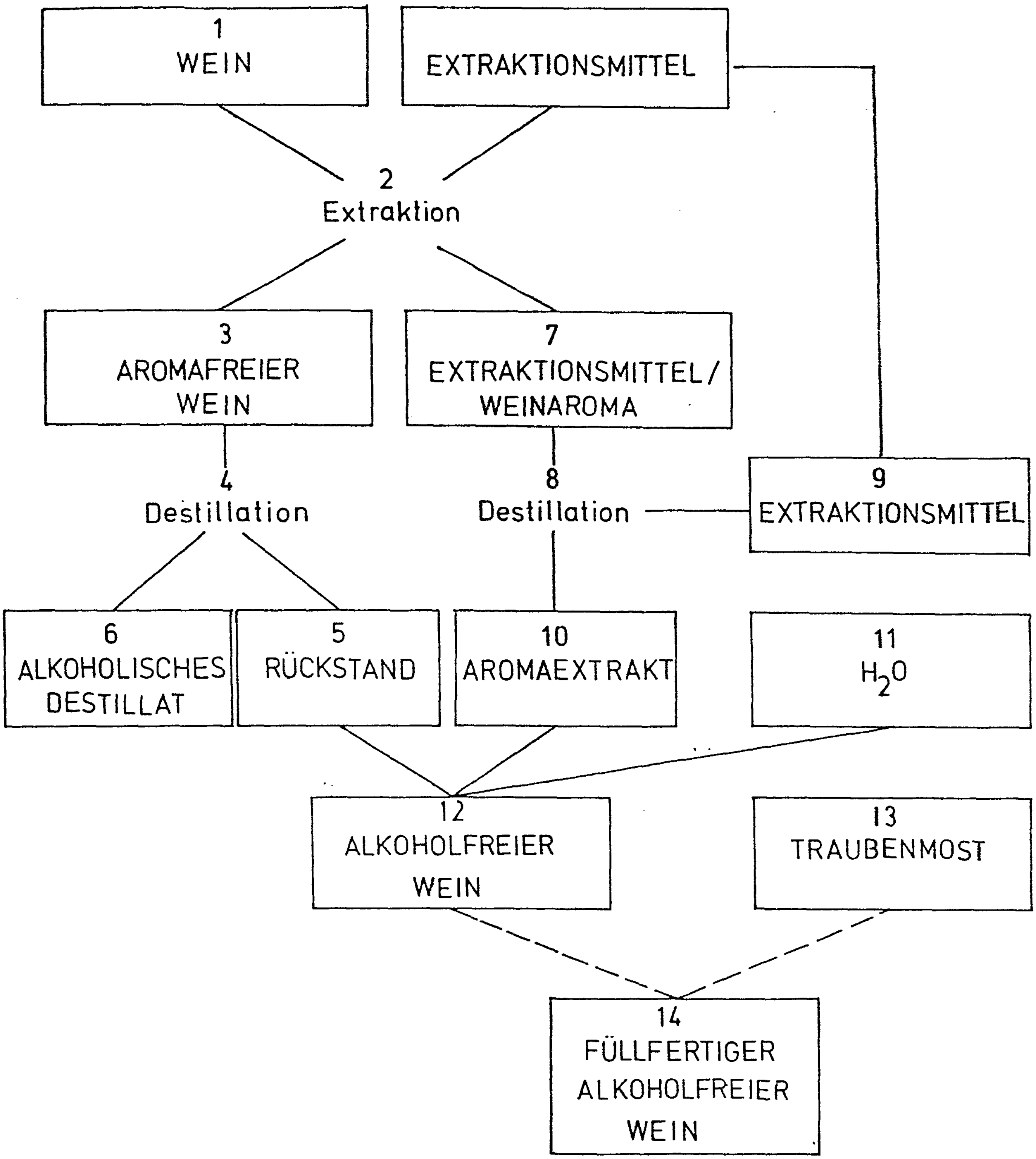
1
WEIN
EXTRAKTIONSMITTEL
2
Extraktion
3
AROMAFREIER
WEIN
7
EXTRAKTIONSMITTEL/
WEINAROMA
4
Destillation
8
Destillation
9
EXTRAKTIONSMITTEL
6
ALKOHOLISCHES
DESTILLAT
5
RÜCKSTAND
10
AROMAEXTRAKT
11
$H_2O$
12
ALKOHOLFREIER
WEIN
13
TRAUBENMOST
14
FÜLLFERTIGER
ALKOHOLFREIER
WEIN

0062799

Europäisches Patentamt

# EUROPÄISCHER RECHERCHENBERICHT

Nummer der Anmeldung

EP 82 10 2463

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-1 199 558 (BROOKE BOND LIEBIG LTD.)<br>* Anspruche 1,2; Beispiele *<br>----- | 1-3,8-11,13 | C 12 G 3/08 |
| | | | RECHERCHIERTE SACHGEBIETE (Int. Cl. 3) |
| | | | C 12 G |

Der vorliegende Recherchenbericht wurde für alle Patentansprüche erstellt.

| Recherchenort | Abschlußdatum der Recherche | Prüfer |
|---|---|---|
| DEN HAAG | 13-07-1982 | COUCKE A.O.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82